# EUROPEAN PATENT SPECIFICATION

(11) **EP 0 482 944 B1**
(45) Date of publication and mention of the grant of the patent: **14.02.1996**
(21) Application number: 91309886.9
(22) Date of filing: 25.10.1991
(51) Int. Cl.: H04N 5/44

(54) **Television signal receiving apparatus**
Fernsehsignalempfangsgerät
Appareil récepteur de signal de télévision

(30) Priority: 26.10.1990 JP 290161/90
(43) Date of publication of application: 29.04.1992
(73) Proprietor: SONY CORPORATION, Tokyo 141 (JP)
(72) Inventor: Kondo, Tetsujiro, c/o Patents Division, Shinagawa-ku Tokyo 141 (JP); Fujimori, Yasuhiro, c/o Patents Division, Shinagawa-ku Tokyo 141 (JP); Nakaya, Hideo, c/o Patents Division, Shinagawa-ku Tokyo 141 (JP)
(74) Representative: Thomas, Christopher Hugo

(56) References cited:
- EP-A- 0 343 539
- US-A- 4 528 585
- SMPTE JOURNAL, vol. 99, no. 2, February 1990, pages 124-135, White Plains, New York, US; L. THORPE et al.: "An HDTV downconverter for post-production"

## Description

This invention relates to television signal receiving apparatus.

A television receiving apparatus, which is capable of converting a high definition television signal, for example, a HDTV signal into a MUSE signal for transmission and reception, has been proposed. However, it is likely to be a long time before television display apparatus, which decodes the MUSE signal and has a CRT of 9 : 16 aspect ratio, is in widespread use, because such apparatus is expensive. While therefore such apparatus is being used for demonstration at the moment, there is also a requirement for down-conversion of a high definition television signal to allow it to be displayed using a television receiving apparatus of the existing system.

An article in the SMPTE Journal, vol. 99, no. 2, February 1990 entitled "An HDTV Downconverter for Post-Production" (Thorpe et al) discloses techniques (like a selected area from the HDTV image is "cut out" and that portion is magnified to constitute a full frame of 525 NTSC) for down-conversion from a 16:9 HDTV signal to conventional 4:3 PAL or NTSC signals for subsequent broadcast transmission.

According to the present invention there is provided a television signal receiving apparatus comprising:
receiving means for receiving a high definition television signal and for generating a high definition video signal;
converting means for converting said high definition video signal into a standard definition video signal;
display means supplied with said standard definition video signal and for displaying the reproduced picture according to said standard definition video signal; and
control means operable by a user including selecting means for selecting an area of the standard picture and a desired degree of enlargement or reduction of the selected area, and processing means for processing said high definition video signal corresponding to said selected area so that the reproduced picture corresponding to the selected area is changed in size according to the desired degree of enlargement or reduction.

The invention will now be described by way of example with reference to the accompanying drawings, throughout which like parts are referred to by like references, and in which:
Figure 1 is a block diagram of one embodiment of this invention;
Figure 2 is a schematic diagram of a displayed picture on a monitor; and
Figure 3 is a schematic diagram of switches on a remote control commander.

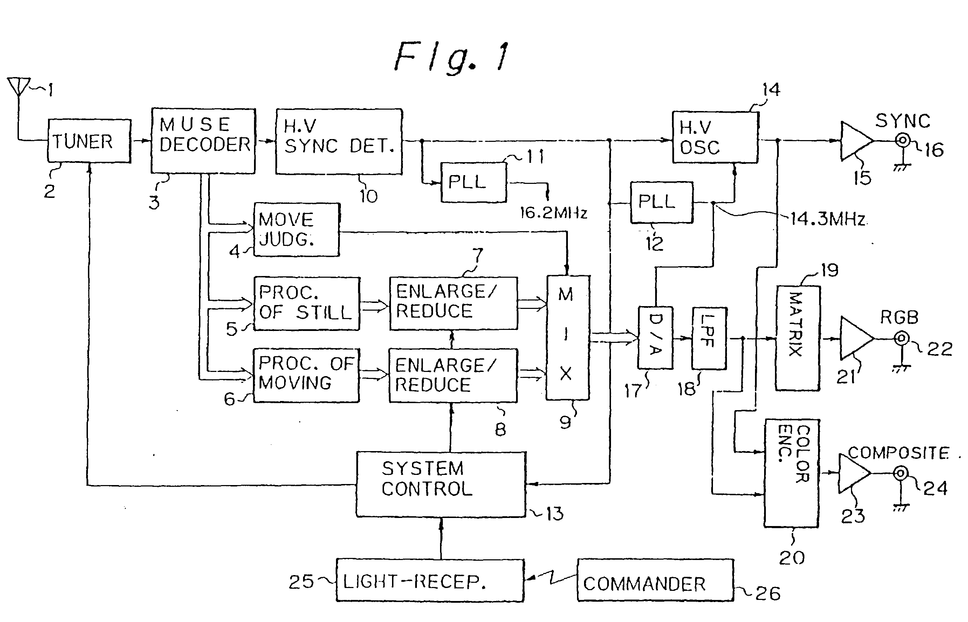

Referring to Figure 1, there is shown an antenna 1 for BS reception, a BS tuner 2, and a MUSE decoder 3. Also, a TCI decoder is provided at the MUSE decoder 3, and a Y (luminance) signal, an R-Y signal and a B-Y signal are produced in parallel from the MUSE decoder 3.

The output signal of the MUSE decoder 3 is fed to a movement judging circuit 4, a still picture processing circuit 5 and a moving picture processing circuit 6. The circuits 4, 5 and 6 may form part of the MUSE decoder 3. In this embodiment, enlargement and reduction circuits 7 and 8 are connected to a still picture system and a moving picture system, respectively. The outputs of the enlargement and reduction circuits 7 and 8 are supplied to a mixer 9. The mixer 9 receives the judgement output signal of the movement judging circuit 4, so that the mixing ratio of a still picture signal and a moving picture signal is controlled.

A synchronization detection circuit 10 is provided in association with the MUSE decoder 3. A horizontal synchronization signal and a frame pulse are supplied to a PLL 11 and a PLL 12, a system control circuit 13 and a synchronization oscillation circuit 14. The PLL 11 generates a clock signal of 16.2 MHz in synchronism with the synchronization signal, while the PLL 12 generates a clock signal of 14.3 MHz in synchronism with the synchronization signal.

In the signal processing done up to the mixer 9, the clock signal of 16.2 MHz generated at the PLL 11 is used. In the processing of a signal produced from the mixer 9, the clock signal of 14.3 MHz from the PLL 12 is used. In response to the synchronization signal from the synchronization detection circuit 10 and the clock signal from the PLL 12, the synchronization oscillation circuit 14 generates a synchronization signal necessary for a standard monitor. This synchronization signal is derived at an output terminal 16 through an amplifier 15.

A digital component signal from the mixer 9 is supplied to a D/A converter 17 and converted into an analogue component signal. The output signal of the D/A converter 17 is supplied through a low-pass filter 18 to a matrix circuit 19 and to a colour encoder 20. The Y, R-Y and B-Y signals are converted by the matrix circuit 19 into three primary colour signals of R, G, B which are derived at an output terminal 22 through an amplifier 21. A synchronization signal from the synchronization oscillation circuit 14 is supplied to the colour encoder 20 to form a composite colour video signal which is derived at an output terminal 24 through an amplifier 23.

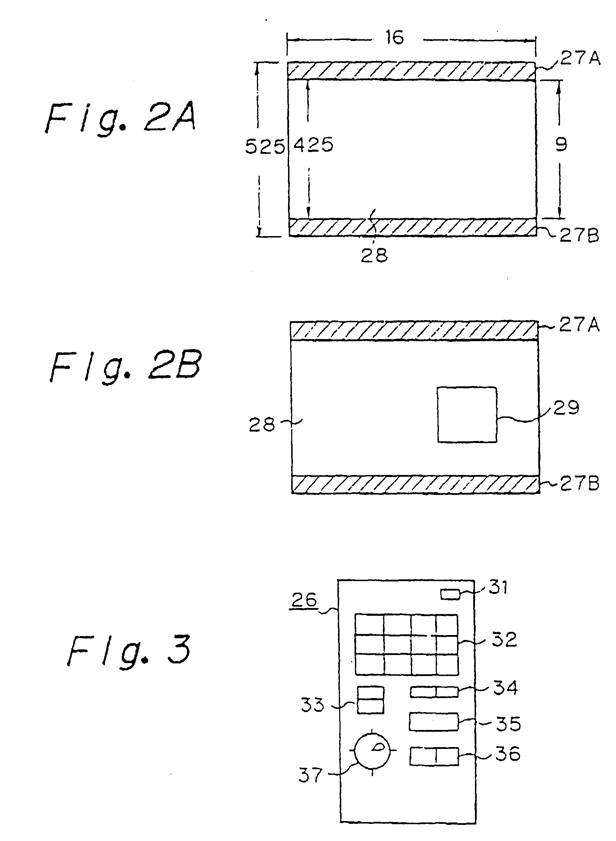

These three primary colour signals or the composite colour video signal have an aspect ratio of 9:16 and provide 1125 horizontal scanning lines. Although not shown, an existing colour monitor of the standard system with an aspect ratio of 4:3 is connected to the output terminal 22 or 24 through a down-converter. Further, a synchronization signal from the output terminal 16 is supplied to the colour monitor. Therefore, a picture corresponding to a MUSE signal received at the standard colour monitor can be reproduced. As one example, predetermined upper and lower scanning lines, for example, 50 lines of the 525 horizontal scanning lines, provide black bands 27A and 27B as shown in Figure 2A, so that a picture 28 of 16:9 aspect ratio is reproduced.

The system control circuit 13 is provided to control the whole operation. In other words, the circuit 13 generates control signals necessary for normal reception of channel selection control signals, etc. for the tuner 2, and control signal for the enlargement and reduction circuits 7 and 8. These control signals designate an area to be enlarged or reduced, and the magnification. A remote control signal (an infrared signal) generated by the operation of a remote control commander 26 is received by a light-reception unit 25 of the system control circuit 13.

Figure 3 shows on example of the commander 26, which comprises a switch for power control 31, a switch 32 for channel selection, a switch 33 for volume increase or decrease, an up/down switch 34 for channel selection, a switch 35 for designating a home position, an up/down switch 36 for magnification change, and a joystick 37.

The picture 28 shown in Figure 2A is displayed on the monitor at a home position when the switch 35 is pressed. In response to movement of the joystick 37, control returns to the home position, and a rectangular frame cursor 29 is displayed in the picture 28 as shown in Figure 2B. The cursor 29 indicates an area to be enlarged or reduced. The cursor 29 is moved within the picture 28 by moving the joystick 37, so that a user can select the area for enlargement or reduction.

The display of the cursor 29 goes off one second, for example, after movement of the joystick 37 stops. Simultaneously, a displayed picture is switched to an enlarged picture. The enlarged picture is derived by the enlargement of the area corresponding to the cursor 29. The amount of enlargement or reduction can be selected by operating the up/down switch 36.

The enlargement or reduction of the picture can be realized by processing a high definition signal by the enlargement and reduction circuits 7 and 8. Enlargement can be achieved by increasing the interval of the picture elements in the horizontal and vertical directions depending on the magnification, and interpolating if there are insufficient picture elements. A picture of size equal to that of the picture at the home position will usually be provided even if the reduction is at a maximum, although reduction to a smaller size than that at the dome position may be provided.

Normally, in the enlargement processing, the quality of a processed picture is degraded. However, since, in a high definition picture, the number of picture elements in each of the horizontal and vertical directions is about twice that in a standard system, no degradation of picture quality occurs until the magnification becomes about two-fold. Also, even in the case of larger magnification, the deterioration of picture quality can be suppressed.

## Claims

1. A television signal receiving apparatus comprising:
receiving means (1 to 9) for receiving a high definition television signal and for generating a high definition video signal;
converting means (19 to 23) for converting said high definition video signal into a standard definition video signal;
display means supplied with said standard definition video signal and for displaying the reproduced picture according to said standard definition video signal; and
control means (26) operable by a user including selecting means (35, 37, 39) for selecting an area of the standard picture and a desired degree of enlargement or reduction of the selected area, and processing means (13, 7, 8) for processing said high definition video signal corresponding to said selected area so that the reproduced picture corresponding to the selected area is changed in size according to the desired degree of enlargement or reduction.

2. Apparatus according to claim 1 wherein said control means (26) includes a remote control commander (26) for generating a control signal for designating the selected area and the desired degree of enlargement or reduction.

3. Apparatus according to claim 1 or claim 2 wherein said control means (26) includes a switching means (35) for designating a home position, and said selected area in said home position defines a minimum size of the reproduced picture.

4. Apparatus according to claim 1, claim 2 or claim 3 wherein said display means includes means for generating a cursor (39) representing said selected area.

## Patentansprüche

1. Fernsehsignalempfangsgerät, mit:
einer Empfangseinrichtung (1 bis 9) zum Empfang eines hochauflösenden Fernsehsignals und zur Erzeugung eines hochauflösenden Videosignals;
einer Umsetzungseinrichtung (19 bis 23) zum Umsetzen des hochauflösenden Videosignals in ein Norm-Videosignal;
einer Anzeigeeinrichtung, die mit dem Norm-Videosignal beliefert wird und zum Anzeigen des reproduzierten Bildes gemäß dem Norm-Videosignal; und
einer Steuereinrichtung (26), die durch einen Benutzer betätigbar ist, die eine Auswahleinrichtung (35, 37, 39) aufweist, um einen Bereich des Normbildes und einen gewünschten Vergrößerungs- oder Verkleinerungsgrad des ausgewählten Bereichs auszuwählen, und einer Verarbeitungseinrichtung (13, 7, 8), um das hochauflösende Videosignal, das dem ausgewählten Bereich entspricht, zu verarbeiten, so daß das wiedergegebene Bild entsprechend dem ausgewählten Bereich größenmäßig entsprechend dem gewünschten Vergrößerungs- oder Verkleinerungsgrad geändert wird.

2. Gerät nach Anspruch 1, wobei die Steuereinrichtung (26) eine Fernsteuerung (26) aufweist, um ein Steuersignal zu erzeugen, um den ausgewählten Bereich und den gewünschten Verstärkungs- oder Verkleinerungsgrad zu bestimmen.

3. Gerät nach Anspruch 1 oder 2, wobei die Steuereinrichtung (26) eine Schaltungseinrichtung (35) aufweist, um eine Ausgangsposition zu bestimmen, wobei der ausgewählte Bereich in der Ausgangsposition eine minimale Größe des reproduzierten Bildes bezeichnet.

4. Gerät nach Anspruch 1, oder 3, wobei die Anzeigeeinrichtung eine Einrichtung zur Erzeugung eines Cursors (39) aufweist, der den ausgewählten Bereich darstellt.

## Revendications

1. Appareil récepteur de signaux de télévision, comprenant:
- des moyens de réception (1 à 9) pour recevoir un signal de télévision à haute définition et pour produire un signal vidéo à haute définition;
- des moyens de conversion (19 à 23) pour convertir ledit signal vidéo à haute définition en un signal vidéo à définition ordinaire;
- des moyens d'affichage recevant ledit signal vidéo à définition ordinaire et pour afficher l'image reproduite selon ledit signal vidéo à définition ordinaire; et
- des moyens de commande actionnables par un utilisateur comprenant des moyens de sélection (35, 37, 39) pour sélectionner une zone de l'image ordinaire et un degré désiré d'agrandissement ou de réduction de la zone sélectionnée, et des moyens de traitement (13, 7, 8) pour traiter ledit signal vidéo à haute définition correspondant à ladite zone sélectionnée de manière que l'image reproduite correspondant à la zone sélectionnée soit changée de taille selon le degré désiré d'agrandissement ou de réduction.

2. Appareil selon la revendication 1, dans lequel lesdits moyens de commande (26) comprennent un boîtier de télécommande (26) pour produire un signal de commande pour désigner la zone sélectionnée et le degré désiré d'agrandissement ou de réduction.

3. Appareil selon la revendication 1 ou la revendication 2, dans lequel lesdits moyens de commande (26) comprennent un moyen de commutation (35) pour désigner une position à atteindre, et ladite zone sélectionnée dans ladite position à atteindre définit la taille minimale de l'image reproduite.

4. Appareil selon la revendication 1, la revendication 2 ou la revendication 3, dans lequel lesdits moyens d'affichage comprennent des moyens pour produire un curseur (39) représentant ladite zone sélectionnée.
